# EUROPÄISCHE PATENTSCHRIFT

(11) **EP 2 917 959 B1**
(45) Veröffentlichungstag und Bekanntmachung des Hinweises auf die Patenterteilung: **09.10.2019**
(21) Anmeldenummer: 13824091.6
(22) Anmeldetag: 11.11.2013
(51) Int. Cl.: H01M 12/06, C25B 1/00, C25B 3/00, C25B 5/00, C25C 1/16, C25C 3/06

(54) **VERFAHREN ZUR BEREITSTELLUNG ELEKTRISCHER ENERGIE FÜR EINEN VERBRAUCHER**
METHOD FOR PROVIDING ELECTRIC ENERGY FOR A LOAD
PROCÉDÉ DE FOURNITURE D'ÉNERGIE ÉLECTRIQUE À UN CONSOMMATEUR

(30) Priorität: 12.11.2012 DE 102012022029
(43) Veröffentlichungstag der Anmeldung: 16.09.2015
(73) Patentinhaber: Caesar, Christoph, 81677 München (DE)
(72) Erfinder: Caesar, Christoph, 81677 München (DE)
(86) Internationale Anmeldenummer: PCT/DE2013/000671
(87) Internationale Veröffentlichungsnummer: WO 2014/071919

(56) Entgegenhaltungen:
- WO-A1-2004/024990
- J.Wochele, Dr.Chr. Ludwig: "Aluminium als Brennstoff und Speicher", , Juni 2004 (2004-06), XP002721944, Gefunden im Internet: URL:http://www.bfe.admin.ch/php/modules/en et/streamfile.php?file=000000008152.pdf&na me=000000240100.pdf. [gefunden am 2014-03-18]

## Beschreibung

Die Erfindung betrifft ein Verfahren zur Bereitstellung elektrischer Energie für einen Verbraucher.

Es ist angedacht, großtechnische Mengen an Strom durch Photovoltaik in sonnenreichen Gebieten (wie z.B. Nordafrika) durch Nutzung von Windenergie in Windparks auf hoher See (z.B. der Nordsee) oder aus Wasserkraft zu erzeugen und an andere Orte zum Verbrauch zu transportieren. Dabei stellen die Energiespeicherung und der Transport der Energie vom Ort der Erzeugung bis zur Verwendung beim Endverbraucher ein großes Problem dar.

Auch wenn der Strom z.B. über Hochspannungstrassen transportiert werden kann, ist die saisonale Erzeugung in der Regel nicht mit dem Verbrauch synchron. Beispielsweise frieren in Norwegen im Winter Speicherseen, welche zur Erzeugung von Strom aus Wasserkraft genutzt werden, zu, wenn in Deutschland der höchste Strombedarf besteht. Die Stromerzeugung aus Wasserkraft kann daher nicht dem Verbrauch angepasst werden. Eine saisonale Speicherung von Strom ist bislang ungeklärt.

Bei dem Projekt Desertec, bei dem Strom durch Photovoltaik in sonnenreichen Ländern erzeugt werden soll, ist es geplant, elektrolytisch erzeugten Wasserstoff zu speichern und nach Europa zu verschiffen. Die Speicherung von Wasserstoff ist - als Flüssiggas bei 20 K - technisch sehr aufwändig, als Gas benötigt sie sehr große Hochdrucktankkapazitäten wegen der geringen Dichte des Wasserstoffes. Zudem ist dieses Vorgehen sehr teuer. Varianten beinhalten die Umwandlung des Wasserstoffes zu Methan, Methanol oder andern Energieträgern. Diese lassen sich leichter speichern und transportieren als der Wasserstoff. Die Erzeugung aus Wasserstoff ist aber mit hohen Verlusten verbunden. Ebenso ist die Option, Hoch-Stromtrassen von Nordafrika nach Mitteleuropa zu bauen, sehr kapitalintensiv und geopolitisch kritisch.

Ähnliche Schwierigkeiten bestehen beim Transport des elektrischen Stroms aus Windparks in offener See. Der Transport, z.B. durch das Wattenmeer, ist technisch schwierig und ökologisch umstritten. Die Verlegung von tausenden Kilometern neuer Hochspannungstrassen, die mit der zentralisierten Energieerzeugung verbunden ist, stößt zudem zunehmend auf Widerstand in der Bevölkerung.

Aus dem von dem Bundesamt für Energie aufgetragenen Bericht "Aluminium als Brennstoff und Speicher" (J. Wochele, Dr. Chr. Ludwig, Paul Scherer Institut, Juni 2004) ist es bekannt, von einem Energieerzeuger erzeugten Strom mittels Elektrolyse als Metall zu speichern und dieses bei Bedarf mittels eines chemischen Umwandlungsprozesses in elektrische Energie zurückverwandeln.

Das Dokument WO 2004/024990 A1 offenbart ein Verfahren zur Kontrolle der Konzentration eines Metalls in einer Elektrolytlösung, bei dem an der Kathode einer Elektrolyseeinheit bei Stromfluss ein Metall abgeschieden wird, welches ab einer vorbestimmten Größe der Metallteilchen von der Kathode abgekratzt wird und einer Sammelröhre mit Flüssigkeit zugeführt wird. Von dort wird die Flüssigkeit mit Metall mittels einer Pumpe über eine Leitung zu einer Brennstoffzelle transportiert.

Es ist Aufgabe der vorliegenden Erfindung, elektrische Energie unabhängig von einem Zeitpunkt und dem Ort der Erzeugung durch einen Energieerzeuger bereitstellen zu können.

Diese Aufgabe wird gelöst durch ein Verfahren mit den Merkmalen des Anspruches 1. Vorteilhafte Ausgestaltungen ergeben sich aus den abhängigen Ansprüchen.

Die Erfindung schafft ein Verfahren zur Bereitstellung elektrischer Energie für einen Verbraucher. Bei diesem Verfahren wird durch einen regenerativen Energieerzeuger Strom erzeugt und an einem ersten Ort durch elektrolytische Erzeugung eines Metalls als Metall gespeichert. Das Metall wird als Brennstoff an einem von dem ersten Ort unterschiedlichen, zweiten Ort eines Energiewandlers zu der Erzeugung elektrischer Energie für den Verbraucher transportiert. Hernach wird durch Ausnützung der chemischen Reaktionsenergie aus dem Metall und einem Oxidationsmittel elektrische Energie erzeugt und dem Verbraucher zum Verbrauch bereitgestellt. Bei diesem Verfahren entspricht das Material der Kathoden dem abgeschiedenen Metall, wobei die Kathoden mit dem abgeschiedenen Metall aus der Wanne entfernt werden, wenn die Speicherkapazität der Wanne erschöpft ist, wobei die Gesamtheit der Kathoden und des abgeschiedenen Metalls als Stückgut oder in Granulatform zu dem Energiewandler transportiert wird und als Brennstoff zur Erzeugung von elektrischer Energie genutzt wird.

Das Verfahren ermöglicht die beliebig lange Speicherung von elektrischer Energie. In Form von Metall. Die Speicherung von Metall ist ohne Verluste möglich. Ebenso ist es möglich, die in Form von elektrolytisch gewonnenen Metall gespeicherte Energie ohne Probleme zu transportierten, so dass die Energieerzeugung beim Verbraucher und die Energiegewinnung zur Durchführung der Elektrolyse an unterschiedlichen Orten erfolgt.

Das vorgeschlagene Verfahren wird mit regenerativ erzeugtem Strom eingesetzt. Beispielsweise kann Spitzenlaststrom, der mittels Windenergie oder Photovoltaik gewonnen ist, gut verwendet werden, um die Elektrolyse zu betreiben.

Bei der Wandlung von Strom in das Metall wird zweckmäßigerweise eine elektrochemische Reaktion zwischen einem Metallion aus einer Lösung mit einem oder mehreren Elektronen aus dem Strom zu einem neutralen Metall ausgenutzt. Die Erzeugung des Metalls kann wahlweise in einer Säure, Salzlösung oder einer Salzschmelze oder einer Mischung aus Salzschmelzen durchgeführt werden, oder in einer organischen oder ionischen Elektrolytflüssigkeit.

Der Strom kann z.B. in metallisches Zink, Aluminium, Lithium, Beryllium, Kalzium, Natrium, Kalium, Titan oder Magnesium, Eisen oder Blei gewandelt werden. Abhängig von dem verwendeten Metall kann eine hohe Energiedichte des in dem Metall gespeicherten Stroms erzielt werden. Wird Zink als Metall verwendet, so beträgt die Energiedichte z.B. 1300 Wh/kg (9280 Wh/l) im Vergleich zu 530 Wh/l bei gasförmigem Wasserstoff (bei 200 bar zuzüglich der Masse der Flaschen) für den Fall der lokalen Speicherung und den Transport. Die Umwandlungseffizienz von elektrischem Strom in metallisches Zink liegt bei 90-100 %. Der Umwandlungsgrad von anderen elektrochemisch umwandelbaren Metallen Lithium, Beryllium, Kalzium, Natrium, Kalium, Aluminium, Titan oder Magnesium, Eisen, Blei ist je nach eingesetzter Technologie und der erforderlichen Prozesstemperatur unter Umständen niedriger.

Gemäß einer Ausgestaltung kann das Metall während der Elektrolyse in einer mit einem Elektrolyten gefüllten Wanne an einer Anzahl an Kathoden abgeschieden werden. Als Elektrolyt kann z.B. verdünnte Schwefelsäure eingesetzt werden. Die Kathoden bestehen vorzugsweise aus einem inerten Material, wie Zink oder Aluminium.

Da das Material der Kathoden der Elektrolyseeinheit dem abgeschiedenen Material entspricht, können die Kathoden mit dem abgeschiedenen Material aus der Wanne entfernt werden, wenn die Speicherkapazität der Wanne erschöpft ist. Dann kann die Gesamtheit der Kathoden und des abgeschiedenen Materials als Brennstoff zur Erzeugung von elektrischer Energie genutzt werden. Hierzu können die Kathoden, an denen sich bei der Elektrolyse das Metall abgeschieden hat, mit einem Kran oder ähnlichem aus der Wanne mit dem Elektrolyten gehoben werden.

Die Wandlung von Strom in das Metall erfolgt vorzugsweise am Ort der Stromgewinnung, d.h. dem Ort der Windkraftanlage oder Photovoltaikanlage. Denkbar ist jedoch auch, die Metallerzeugung räumlich getrennt von der Stromgewinnung zu realisieren.

Um eine einfache und effiziente Metallgewinnung zu ermöglichen, erfolgt die Metallerzeugung gemäß einer Ausgestaltung des Verfahrens in standardisierten Wannen, insbesondere Containern.

Wahlweise kann der Transport des Metalls als Stückgut, z.B. als Barren oder Platten, oder in Granulatform erfolgen. Gemäß einer nicht zur Erfindung gehörenden Alternative kann das erzeugte Metall in einer Flüssigkeitssuspension verflüssigt werden, wobei die das Metall enthaltende Flüssigkeitssuspension dann an den Ort der Energieerzeugung, d.h. den Ort des Energiewandlers, gepumpt oder transportiert wird. Hierzu können entweder Pipelines oder Tankwagen genutzt. Insbesondere kann hier auch die z.B. für Kraft- oder Brennstoffe vorhandene Infrastruktur genutzt werden.

Die Energiewandlung (d.h. die Energieerzeugung zum Bereitstellen von Energie für den Verbraucher) erfolgt gemäß einer Ausgestaltung in einer Brennstoffzelle. Durch diese kann die Erzeugung der elektrischen Energie zentral oder bei einem lokalen Verbraucher erfolgen.

Zur Erhöhung des Gesamtwirkungsgrads der Energieübertragungs- und - umwandlungskette kann zudem die bei der Erzeugung der elektrischen Energie anfallende (Abfall-)Wärme zur Wärmeerzeugung genutzt werden. Die Brennstoffzelle kann funktional somit ähnlich einem Blockheizkraftwerk betrieben werden.

Es kann ebenso vorgesehen sein, dass aus dem Metall durch Zugabe eines Reaktionsmittels Wasserstoff erzeugt wird. Dieser kann thermisch oder chemisch genutzt werden. Ebenso kann der Wasserstoff in einer Brennstoffzelle als Brennstoff zur Stromerzeugung genutzt werden. Wird als Metall durch die Elektrolyse Zink erzeugt, so muss als Reaktionsmittel Säure zu dem Metall zugegeben werden. Wird als Metall durch die Elektrolyse Natrium, Kalium oder Kalzium erzeugt, so muss als Reaktionsmittel Wasser zu dem Metall zugegeben werden.

Gemäß einer weiteren Ausgestaltung werden bei der Energiewandlung verbrauchte Behälter mit dem Metall oder durch den Verbrauch des Metalls angefallene Schlämme an den Ort der Elektrolyse transportiert, wo sie zur Erzeugung des Metalls in den Elektrolysevorgang eingespeist werden. Hierdurch ist ein Kreislauf geschaffen, in dem ein reines Metall mit nicht schwankender Zusammensetzung mit höchster Effizienz genutzt werden kann.

Die Erfindung wird nachfolgend näher anhand von Ausführungsbeispielen unter Bezugnahme auf die Zeichnung beschrieben. Es zeigen:
- Fig. 1: eine schematische Darstellung eines erfindungsgemäßen Systems zur Durchführung des Verfahrens, und
- Fig. 2: einen schematischen Ablauf des erfindungsgemäßen Verfahrens.

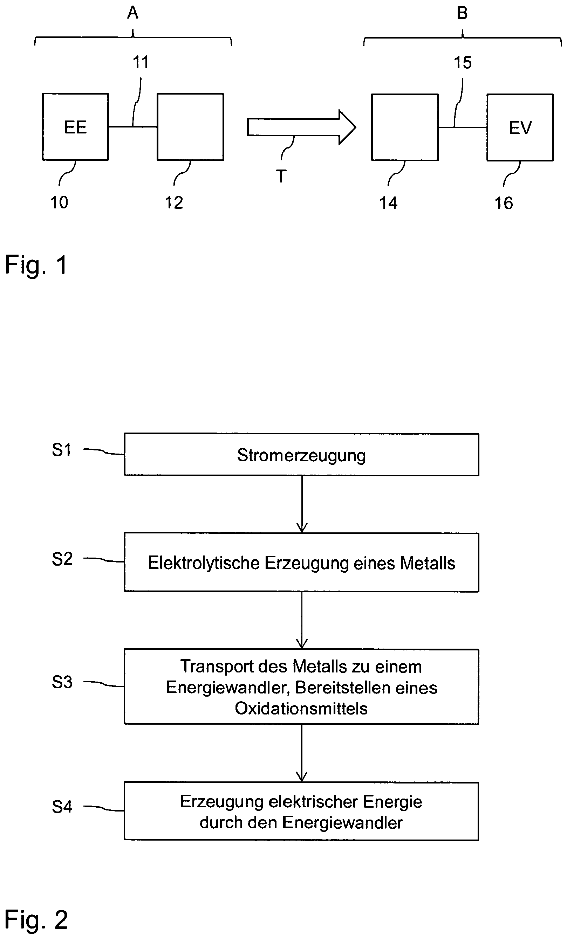

Fig. 1 zeigt eine schematische Darstellung eines erfindungsgemäßen Systems zur Bereitstellung von elektrischer Energie für einen elektrischen Verbraucher 16. An einem ersten Ort A wird durch einen Energieerzeuger 10 elektrischer Strom erzeugt. Dieser kann z.B. in Offshore-Windkraftanlagen oder Photovoltaikfelder gewonnen oder durch Wasserkraft, z.B. in Norwegen, erzeugt sein. Der Strom wird durch eine Elektrolyseeinheit 12, welche von dem Energieerzeuger 10 über eine Leitung 11 mit Strom versorgt wird, in der Form von elektrolytisch erzeugtem Metall gespeichert. Im Ausführungsbeispiel der Fig. 1 befindet sich der Energieerzeuger 12 ebenfalls am Ort A. Dies ist jedoch nicht zwingend. Das Metall wird zum Verbraucher 16, der sich z.B. an einem Ort B befindet, transportiert (T). Dort erfolgt mittels eines Energiewandlers 14 eine Wandlung des Metalls in elektrische Energie, die dem Verbraucher 16 über eine Stromleitung 15 zu dessen Betrieb zugeführt wird. Der Energiewandler 14 kann beispielsweise in der Form einer Brennstoffzelle ausgestaltet sein. Der Energiewandler 14 und der Verbraucher 16 könnten auch an unterschiedlichen Orten angeordnet sein, d.h. die Energiewandlung muss nicht zwingend am Ort des Verbrauchs erfolgen, wie dies in Fig. 1 dargestellt ist.

Der Vorgang der elektrolytischen Erzeugung des Metalls in der Elektrolyseeinheit 12 und dessen Wandlung in dem Energiewandler 14 kann wie folgt ablaufen. In der Elektrolyseeinheit 12 wird eine elektrochemische Reaktion zwischen einem Metallion (Me+) aus einer Salzlösung mit einem Elektron (aus der Stromerzeugung) zu dem neutralen Metall ausgenutzt. Für die Erzeugung von beispielsweise Zink (Zn) gilt:

2 ZnSO4 + 2 H2O → 2 Zn + 2 H2SO4 + O2

Aus dem Metall wird nach einer Aufarbeitung in dem als Brennstoffzelle ausgebildeten Energiewandler 14 für den Verbraucher elektrische Energie erzeugt, wobei folgende Reaktionen ablaufen:

| | |
|---|---|
| Anode: | Zn + 4OH- → Zn(OH)4 2- + 2e- (E0 = -1.25 V) |
| Kathode: | 1/2 O2 + H2O + 2e- → 2OH- (E0 = 0.34 V pH 11) |
| Gesamt: | 2Zn + O2 → 2ZnO (E0 = 1.59 V). |

Eine andere Reaktion erfolgt z.B. in einer Aluminium-Luft-Brennstoffzelle mit Kaliumhydroxyd als Elektrolyt:

| | |
|---|---|
| Anode | Al + 3OH- → Al(OH)3 + 3e- -1.66 V |
| Kathode: | O2 + 2H2O + 4e- → 4OH- +0.40 V |
| Gesamt: | 4Al + 3O2 + 6H2O - 4Al(OH)3 + 2.71 V. |

Welches Material bei der Elektrolyse erzeugt wird, kann beispielsweise abhängig vom Energieinhalt der Metalle in Wh/kg gemacht werden. Eine entsprechende Information über den Energieinhalt unterschiedlicher Metalle kann beispielsweise der Online-Enzyklopädie Wikipedia unter http://en.wikipedia.org/wiki/Metal%E2%80%93air electrochemical cell entnommen werden.

Vorteil der Wandlung von Strom in ein Metall ist die hohe Energiedichte des Metalls. Für Zink beträgt diese z.B. 1300 Wh/kg (9280 Wh/l) im Vergleich zu 530 Wh/l für gasförmigem Wasserstoff (bei 200 bar zuzüglich der Masse der Flaschen) für den Fall der lokalen Speicherung und den Transport. Die Umwandlungseffizienz von elektrischem Strom in metallisches Zink liegt bei 90 bis 100 % und ist damit ebenfalls sehr hoch.

Der Umwandlungsgrad von anderen elektrochemisch umwandelbaren Metallen, wie z.B. Lithium, Beryllium, Kalzium, Natrium, Kalium, Aluminium, Titan oder Magnesium, Eisen, Blei ist unter Umständen niedriger, je nach eingesetzter Technologie und der erforderlichen Prozesstemperatur. Dabei ist es prinzipiell möglich, jede Elektrolysezelle in ihrem optimalen Betriebspunkt zur Stromumsetzung zu betreiben, so dass eine billige und effektive Stromspeicherung möglich ist.

Mit einer Brennstoffzelle lässt sich ein Wirkungsgrad von 20 % bis 60 % erreichen, ein für den Betrieb des Verbrauchers notwendiger Wechselrichter (in Fig.1 nicht dargestellt) erreicht Wirkungsgrade von 93 % bis 98 %. Die moderne Gleichrichter- und Wechselrichtertechnik bietet nach dem Stand der Technik ausreichende Steuerungsmöglichkeiten für die Optimierung jedes Lade- und Entladevorganges.

Der Gesamtwirkungsgrad des Verfahrens muss mit den Verlusten anderer Speicher- und Transportszenarien verglichen werden. Der Wirkungsgrad der Wasserstofferzeugung in einem Hochleistungs-Elektrolyseur liegt zwischen 70 bis 90 %.

Pumpspeicherwerke und Hochspannungstrassen verursachen ebenfalls beträchtliche Verluste. Alle Pumpspeicherwerke Deutschlands haben eine Kapazität von ca. 40 GWh, wohingegen das Gasnetz eine Kapazität von 200.000 GWh haben soll. Dies entspricht dem Energieverbrauch Deutschlands von mehreren Monaten. In Form von metallischem Zink würde eine einzige Jahresproduktion an Zink (10 Mio t/ 2006) einer gespeicherten Energiemenge von 13.000 GWh entsprechen. Diese Masse wäre in ca. 2.000 Güterzügen à 5.000 t metallisches Zink transportierbar und gleichzeitig mit unbegrenzter Haltbarkeit saisonal gespeichert. Die Transportkapazität von max. 60 m³ pro Waggon wird hierbei nicht ausgenutzt. Bei Verwendung von Kalzium (2500 Wh/kg) mit einer Dichte von nur 1,55 g/cm³ könnte die gleiche Energiemenge in ca. 500 Güterzügen pro Jahr - d.h. ca. 2 Züge pro - Tag gespeichert und transportiert werden.

Ein weiterer Vorteil der Erfindung ist, dass Metalle weitgehend risikolos für Mensch und Umwelt transportiert werden können. Zink ist ein wichtiges Spurenelement und wird weiträumig als Korrosionsschutz verwendet. Sollte es bei einem Störfall in die Umwelt gelangen, so löst es sich langsam zu natürlich vorkommenden Salzen und Hydroxiden auf. Selbst die bei der Elektrolyse verwendete (verdünnte) Schwefelsäure würde sich im Meerwasser - sofern die Elektrolyse auf dem Meer nahe einer Offshore-Windkraftanlage betrieben wird - schnell verdünnen und wäre auf natürliche Weise unschädlich.

Bei der Erzeugung und dem Transport von metallischem Lithium, Natrium oder Kalium ist ein erhöhter Sicherheitsaufwand erforderlich, da diese Metalle bei Kontakt mit der Umwelt bzw. mit Wasser unter starker Hitze- und Wasserstoffentwicklung verbrennen. Das Gleiche gilt allerdings auch für den Transport von Erdgas, Benzin und - am schwerwiegendsten - dem Wasserstoff selber. Metallisches Kalzium muss vor Luftkontakt geschützt werden, um Oxidation und Nitrierung zu vermeiden. Bei Wasserkontakt entwickelt sich etwas Wasserstoff, allerdings ohne Wärmeentwicklung und Selbstentzündung.

Ein weiterer Vorteil besteht darin, dass eine lokale Brennstoffzelle auch in geschlossenen Gebäuden mit kontrollierter Belüftung betrieben werden kann. Platzprobleme wie bei miniaturisierten Zink-Luftzellen, welche z.B. zum Antrieb in Fahrzeugen verwendet werden, gibt es nicht, da eine Zwangsbelüftung der Brennstoffzelle im halb- bzw. großtechnischen Maßstab einfach zu realisieren ist.

Das allgemeine Verfahren zur Bereitstellung von elektrischer Energie für einen elektrischen Verbraucher ist schematisch in Fig. 2 dargestellt. In Schritt S1 erfolgt eine konventionelle Stromerzeugung, vorzugsweise durch die Nutzung regenerativer Energiequellen. In Schritt S2 erfolgt die oben beschriebene elektrolytische Erzeugung des Metalls, so dass der für die Elektrolyse genutzte Strom nun in der Form von Metall gespeichert ist. S1 und S2 können an den gleichen Orten durchgeführt werden. In Schritt S3 erfolgt der Transport des Metalls und eines Oxidationsmittels zu einem Energiewandler, der als lokaler oder zentraler Energiewandler ausgebildet sein kann. Schließlich erfolgt in Schritt S4 die Erzeugung elektrischer Energie durch den Energiewandler, welche dann dem Verbraucher zur Nutzung bereitgestellt wird.

Nachfolgend werden weitere Ausführungsformen der Erfindung beschrieben, wobei das Wort "Zink" stellvertretend für eines der Metalle steht, die oben als "elektrochemisch erzeugbare Metalle" genannt wurden.

In einer Ausführungsform der Erfindung kann in der Nähe eines Offshore-Windparks als Energieerzeuger 10 eine schwimmende Plattform oder eine Insel auf Pfeilern verankert werden. Von den Windkraftanlagen des Windparks erzeugter Strom kann über kurze, lokale Leitungen der auf der Plattform oder Insel angeordneten Elektrolyseeinheit 12 zugeführt werden. Die Elektrolyseeinheit 12 umfasst in einer z.B. mit Kunststoff ausgekleideten Wanne einen Elektrolyten, z.B. verdünnte Schwefelsäure. An einer Anzahl an Kathoden, die vorzugsweise aus einem inerten Material, wie Zink, bestehen, wird metallisches Zink abgeschieden. Die Kathoden sind beispielsweise zu einem Kathodenfeld angeordnet. Anoden der Elektrolyseeinheit 12 werden nach dem Stand der Technik gestaltet und bestehen z.B. aus Blei- oder sind mit Blei ummantelt.

Das Kathodenfeld kann am Ende der Speicherkapazität der Wanne, z.B. bei Kurzschluss durch das sich berührende Metall zweier benachbarter Kathoden, abgeschaltet werden und mit einem Kran aus dem Elektrolyten herausgehoben werden. Da Kathoden aus Zink verwendet werden, kann die gesamte Einheit (Kathodenfeld mit dem an den Kathoden abgeschiedenen Metall) ohne Abtrennung des Kathodenmaterials aus der Wanne der Elektrolyseeinheit 12 herausgehoben werden. Die Einheit kann als Brennstoff für den Energiewandler 14 zu diesem transportiert werden.

Bestehen die Kathoden gemäß einer nicht zur Erfindung gehörenden Ausführungsform nicht aus Zink, so können die bei der Galvanik entstehenden Dendriten aus metallischem Zink im Elektrolyseprozess in geeigneten zeitlichen Abständen durch einen Stempel kompaktiert werden, so dass der Prozess bis zum kompletten Füllen der Elektrolysewanne mit Metall durchgeführt werden kann. Vorzugsweise werden hierbei inerte, leicht konische Kathoden verwendet, deren abgeschiedene Metallschichten in Abständen in die Wanne abgestreift werden. Vorzugsweise stellt die Wanne einen standardisierten Container dar. Die Metallerzeugung kann automatisiert abgewickelt werden.

In einer alternativen, nicht zur Erfindung gehörenden Ausgestaltung kann die Erzeugung des Metalls in einer Salzlösung, einer Salzschmelze oder einer Mischung aus Salzschmelzen durchgeführt werden, z.B. zur Erzeugung von Lithium, Aluminium, Magnesium oder Kalzium.

Bei der Energiewandlung in dem Energiewandler 14 wird durch chemische Reaktionsenergie aus dem Metall und einem Oxidationsmittel elektrische Energie erzeugt. In einer Ausführungsform kann neben dem erzeugten Strom freiwerdende Abfallwärme (40 % bei einer schlechten Zink-Luft - Zelle) z.B. für Heizzwecke genutzt werden.

In einer anderen Ausführung wird aus dem Metall durch Zugabe von Säure (bei Zink) oder Wasser (bei Natrium, Kalium oder Kalzium) Wasserstoff erzeugt, der thermisch oder chemisch genutzt werden kann oder in einer Brennstoffzelle zu Strom umgewandelt wird. Der Gesamtwirkungsgrad nimmt durch den Zwischenschritt etwas ab, es kann aber - je nach lokalen Gegebenheiten - zur Deckung von Spitzenlasten im Stromverbrauch sehr sinnvoll sein, in konventionelle Gasturbinenkraftwerke Wasserstoff einzuspritzen oder den Wasserstoff mit Luft als sofort verfügbare Spitzenlastreserve in vorhandenen thermischen Kraftwerken zu verbrennen. Das Metall ist hier als Kostenfaktor nicht mit dem Marktpreis anzusetzen, sondern nur mit den Stromkosten im Kreislauf zwischen Metallreduktion und Oxidation beim Verbraucher. Aus dem billigen Strom aus Norwegen oder der Nordsee wird hier hochpreisiger Spitzenlaststrom.

Unverbrauchtes Zink aus erschöpften Brennstoffspeichern des Energiewandlers kann an Sammelstellen abgetrennt und für eine zentrale Restnutzung verwendet werden. Verbrauchte Zellen und Schlämme aus ZnO können zu dem Betreiber der Elektrolyseeinheit zurückgebracht werden, wo sie in den Elektrolysevorgang eingespeist werden können. Vorteil dieses Kreislaufes ist, dass ein sehr reines Produkt in einem Kreislauf gehalten werden kann, der nicht durch schwankende Zusammensetzung der natürlichen Erze - wie bei der Primärverhüttung von Zink und anderen Metallen - gestört wird.

Der Transport des Zinks (Metalls) kann als Stückgut in Behältern durch beliebige Transportunternehmen realisiert sein. In einer Ausführung können z.B. in Straßennähe liegende, standardisierte Behälter mit dem Betreiber der Elektrolyseeinheit 12 ausgetauscht werden. Diese Variante ist für entlegenere Nutzer oder Insellösungen vorteilhaft. Die Behälter können auch zu zentralen Betreibern von Energiewandlern transportiert werden. Gemäß einer nicht zur Erfindung gehörenden Ausführungsform kann das Metall in einer Flüssigkeitssuspension enthalten sein, welche dann mittels Tankwagen und Pipelines gefördert werden kann. Insbesondere kann hier auch die z.B. für Kraft- oder Brennstoffe vorhandene Infrastruktur genutzt werden.

In einer Ausführung erfolgt der Metalltransport zu lokalen Energieversorgern (EVU), die mit der elektrolytisch in Metallen gespeicherten Energie alle Spitzenlasten abdecken können. Damit ist ein wirtschaftlicher Betrieb ihrer konventionellen Grund- oder Mittellastkraftwerke möglich.

Die Erfindung eignet sich dafür, in Spitzenzeiten anfallenden Wind- und Solarstrom nach dem EEG (Erneuerbare-Energien-Gesetz) zwischenzuspeichern. Die Technik ist dabei nicht die einer unbegrenzt wieder aufladbaren Batterie, sondern der Speicherung und Nutzung von unerwünschter Spitzenstromerzeugung. Diese Spitzenstromerzeugungen führen zum Teil zu negativen Strompreisen - d.h. das EVU muss an Nachbarländer zahlen, damit diese den Strom abnehmen. Der nach einer Speicherphase geladene Metallspeicher des Photovoltaikfeldes oder des Windparks wird zur einfachen Aufarbeitung und Stromgewinnung zum EVU transportiert.

Es ist davon auszugehen, dass der Gesamtwirkungsgrad und die Gesamtwirtschaftlichkeit der Energieerzeugung steigen, sobald Mittel- und Grundlastkraftwerke wieder wirtschaftlich betrieben werden können und solar erzeugter Strom (z.B. im Winter) in Form des elektrolytisch erzeugten Metalls zur Spitzenlastdeckung verwendet wird.

### BEZUGSZEICHENLISTE

- 10: Energieerzeuger
- 11: Stromleitung
- 12: Elektrolyseeinheit
- 14: Energiewandler
- 15: Stromleitung
- 16: elektrischer Energieverbraucher
- T: Transportstrecke
- A: Ort
- B: Ort

## Patentansprüche

1. Verfahren zur Bereitstellung elektrischer Energie für einen Verbraucher (16), bei dem
a) durch einen regenerativen Energieerzeuger (10) Strom erzeugt und an einem ersten Ort (A) durch elektrolytische Erzeugung eines Metalls als Metall gespeichert wird, wobei das Metall in einer mit einem Elektrolyten gefüllten Wanne an einer Anzahl an Kathoden abgeschieden wird;
b) das Metall als Brennstoff an einen von dem ersten Ort (A) unterschiedlichen, zweiten Ort (B) eines Energiewandlers (14) zu der Erzeugung elektrischer Energie für den Verbraucher (16) transportiert wird;
c) durch Ausnützen chemischer Reaktionsenergie aus dem Metall und einem Oxidationsmittel elektrische Energie erzeugt und dem Verbraucher (16) zum Verbrauch bereitgestellt wird;
**dadurch gekennzeichnet, dass**
das Material der Kathoden dem abgeschiedenen Metall entspricht, wobei die Kathoden mit dem abgeschiedenen Metall aus der Wanne entfernt werden, wenn die Speicherkapazität der Wanne erschöpft ist, wobei die Gesamtheit der Kathoden und des abgeschiedenen Metalls als Stückgut oder in Granulatform zu dem Energiewandler (14) transportiert wird und als Brennstoff zur Erzeugung von elektrischer Energie genutzt wird.

2. Verfahren nach Anspruch 1, bei dem die Wandlung von Strom in das Metall eine elektrochemische Reaktion zwischen einem Metallion aus einer Lösung mit mindestens einem Elektron aus dem Strom zu einem neutralen Metall ausnutzt.

3. Verfahren nach Anspruch 2, bei dem die Erzeugung des Metalls in einer Säure, einer Salzlösung oder Salzschmelze oder einer Mischung aus Salzschmelzen oder einer organischen oder ionischen Elektrolytflüssigkeit durchgeführt wird.

4. Verfahren nach einem der vorhergehenden Ansprüche, bei dem der Strom in metallisches Zink, Aluminium, Lithium, Beryllium, Kalzium, Natrium, Kalium, Titan oder Magnesium, Eisen oder Blei gewandelt wird.

5. Verfahren nach einem der vorhergehenden Ansprüche, bei dem die Wandlung von Strom in das Metall am Ort der Stromgewinnung erfolgt.

6. Verfahren nach einem der vorhergehenden Ansprüche, bei dem die Metallerzeugung in standardisierten Wannen, insbesondere Containern, erfolgt.

7. Verfahren nach einem der vorhergehenden Ansprüche, bei dem die elektrische Energie gemäß Schritt c) in einer Brennstoffzelle erzeugt wird.

8. Verfahren nach einem der vorhergehenden Ansprüche, bei dem die Erzeugung der elektrischen Energie zentral oder bei einem lokalen Verbraucher (16) erfolgt.

9. Verfahren nach einem der vorhergehenden Ansprüche, bei dem die bei der Erzeugung der elektrischen Energie anfallende Wärme zur Wärmeerzeugung genutzt wird.

10. Verfahren nach einem der vorhergehenden Ansprüche, bei dem aus dem Metall durch Zugabe eines Reaktionsmittels Wasserstoff erzeugt wird.

11. Verfahren nach einem der vorhergehenden Ansprüche, bei dem bei der Energiewandlung verbrauchte Behälter mit dem Metall oder durch den Verbrauch des Metalls angefallene Schlämme an den Ort der Elektrolyse transportiert werden, wo sie zur Erzeugung des Metalls in den Elektrolysevorgang eingespeist werden.

## Claims

1. A method of providing electrical energy to a consumer (16) comprising:
a) electric power production from a renewable source of electricity (10) and which is stored at a first location by electrolytically producing a metal as metal wherein the metal is deposited in a tub filled with an electrolyte on a number of cathodes.
b) the metal as fuel is transported to a second place (B) of an electrical converter (14) which is different from the first location of production of electrical energy (A) for production of electrical energy for a consumer;
c) generating electrical energy by utilizing chemical reaction energy from the metal and an oxidant and providing it to the consumer (16) for consumption-
- **characterized by** the facts that
- the material of the cathodes corresponds to the deposited material, wherein the cathodes with the deposited material are removed from the well when the storage capacity of the tub is depleted, whereby the entirety of the cathodes and the deposited material is transported as piece goods or in granular form to the electrical converter (14) and is used as fuel for the production of electrical energy.

2. The method of claim 1, wherein the conversion of current into the metal utilizes an electrochemical reaction between a metal ion from a solution having at least one electron from the stream to form a neutral metal.

3. The method of claim 2, wherein the production of the metal is carried out in an acid, a salt solution or molten salt or a mixture of molten salts or an organic or ionic electrolyte liquid.

4. A method according to any one of the preceding claims, wherein the stream is converted to metallic zinc, aluminum, lithium, beryllium, calcium, sodium, potassium, titanium or magnesium, iron or lead.

5. Method according to one of the preceding claims, wherein the conversion of electricity into the metal takes place at the place of power generation.

6. Method according to one of the preceding claims, in which the metal is produced in standardized tubs, in particular containers.

7. Method according to one of the preceding claims, in which the electrical energy according to step c) is generated in a fuel cell.

8. Method according to one of the preceding claims, in which the generation of the electrical energy takes place centrally or at a local consumer (16).

9. Method according to one of the preceding claims, in which the heat generated during the generation of the electrical energy is used to generate heat.

10. A method according to any one of the preceding claims, wherein hydrogen is generated from the metal by addition of a reactant.

11. Method according to one of the preceding claims, in which containers consumed in the energy conversion are transported with the metal or by the consumption of the metal incurred sludge to the place of electrolysis, where they are fed to produce the metal in the electrolysis process

## Revendications

1. Procédé de fourniture d'énergie électrique à un consommateur (16), comprenant
a) la production d'électricité par un générateur d'énergie régénérative (10) et son stockage à un premier emplacement (A) sous forme de métal produit électrolytiquement, le métal étant déposé sur un certain nombre de cathodes placées dans une cuve rempli d'électrolyte;
b) le transport du métal sous forme combustible vers un deuxième emplacement (B) d'un convertisseur d'énergie (14) différent du premier emplacement (A) pour la génération d'énergie électrique pour le consommateur (16)
c) la production d'électricité en utilisant l'énergie de réaction chimique du métal et d'un oxydant et sa fourniture au consommateur (16) pour la consommation;
et **caractérisé en ce que**
le matériau des cathodes correspondant au métal déposé ; les cathodes avec le métal déposé sont retirées de la cuve lorsque la capacité de stockage de la cuve est épuisée, l'intégralité des cathodes et du métal déposé se trouvant en vrac ou sous forme granulaire est transporté vers le convertisseur d'énergie (14) et utilisé comme combustible pour la production d'électricité.

2. Procédé suivant la revendication 1, pour lequel la conversion du courant en métal est réalisée par une réaction électrochimique entre un ion métallique provenant d'une solution contenant au moins un électron du courant vers un métal neutre.

3. Procédé suivant la revendication 2, pour lequel la production du métal est effectuée dans un acide, une solution saline ou un sel fondu ou un mélange de sels fondus ou une solution électrolytique organique ou ionique.

4. Procédé suivant l'une quelconque des revendications précédentes, pour lequel le courant est converti en métal tel que le zinc, l'aluminium, le lithium, le béryllium, le calcium, le sodium, le potassium, le titane ou le magnésium, le fer ou le plomb.

5. Procédé suivant l'une quelconque des revendications précédentes, pour lequel la conversion de l'électricité en métal a lieu sur le lieu de la production d'énergie.

6. Procédé selon l'une quelconque des revendications précédentes, pour lequel le métal est produit dans des cuves standardisées, tel que des conteneurs.

7. Procédé suivant l'une quelconque des revendications précédentes, pour lequel l'énergie électrique conformément à l'étape c) est générée dans une pile à combustible.

8. Procédé suivant l'une quelconque des revendications précédentes, pour lequel l'énergie électrique est générée de manière centralisée ou chez un consommateur local (16).

9. Procédé suivant l'une quelconque des revendications précédentes, pour lequel la chaleur générée lors de la génération d'énergie électrique est utilisée pour générer de la chaleur.

10. Procédé suivant l'une quelconque des revendications précédentes, pour lequel de l'hydrogène est généré à partir du métal par addition d'un réactif.

11. Procédé suivant l'une quelconque des revendications précédentes, pour lequel, les conteneurs usagés issus de la conversion d'énergie contenant le métal ou les boues générées par la consommation du métal sont transportés vers le lieu de l'électrolyse, où ils seront réintégrés dans le processus d'électrolyse chargé de produire le métal.
